# EUROPÄISCHE PATENTSCHRIFT

(11) **EP 1 084 886 B1**
(45) Veröffentlichungstag und Bekanntmachung des Hinweises auf die Patenterteilung: **07.05.2008**
(21) Anmeldenummer: 00119620.3
(22) Anmeldetag: 08.09.2000
(51) Int. Cl.: B60J 7/20

(54) **Cabriolet-Fahrzeug**
Convertible vehicle
Véhicule cabriolet

(30) Priorität: 13.09.1999 DE 19943863
(43) Veröffentlichungstag der Anmeldung: 21.03.2001
(73) Patentinhaber: Wilhelm Karmann GmbH, 49084 Osnabrück (DE)
(72) Erfinder: Exner, Markus, 49191 Belm (DE); Russke, Klaus, 49143 Bissendorf (DE)
(74) Vertreter: Busse & Busse Patentanwälte

(56) Entgegenhaltungen:
- EP-A- 0 949 104
- DE-C- 4 445 944
- DE-C- 19 851 181

## Beschreibung

Die Erfindung bezieht sich auf ein Cabriolet-Fahrzeug mit einem im rückwärtigen Fahrzeugbereich unterhalb eines Deckelteils ablegbaren Dach, wobei das Deckelteil einerseits auf Freigabe einer seinem vorderen Endbereich benachbarten Durchtrittsöffnung für das Dach und andererseits auf Freigabe einer seinem hinteren Endbereich benachbarten Aufnahmeöffnung für Gepäck auf und zu beweglich ist.

Aus der gattungsgemäßen DE 44 45 944 ist ein Cabriolet-Fahrzeug bekannt, bei dem zur Halterung einer Mehrgelenkanordnung, die die Freigabe der Aufnahmeöffnung für das Gepäck bewirkt und sich im vorderen Bereich des Deckelteils befindet, ein Hilfsrahmen vorgesehen ist, der sich, ausgehend von der jeweiligen seitlichen Mehrgelenkanordnung, in Fahrzeuglängsrichtung heckwärts erstreckt und über ein quer zum Fahrzeugheck verlaufenden Teil geschlossen ist. Ein derartiger Hilfsrahmen beschränkt den nutzbaren Raum im Heckbereich. Dadurch, daß der hintere Querrahmenteil gleichzeitig als Schwenkachse für die Freigabe der vorderen Durchtrittsöffnung für das Dach dient, ist diese Achse einem tiefgelegenen Bereich der Karosserie zugeordnet. Das Deckelteil ist zur Achse beabstandet und benötigt daher einen erheblichen Schwenkradius. Hierfür muß eine heckseitig sichtbare Aussparung in der Karosserie vorgesehen werden. Die dadurch zwangsläufig bedingte relativ große Fuge unterhalb des Deckelteils zum heckseitigen Karosserieabschluß ist optisch störend.

Aus der EP 0 949 104 A1 ist ein Cabriolet-Fahrzeug bekannt, bei dem ein schwenkbarer Öffnungszylinder sowohl die Öffnungsbewegung für Freigabe des Gepäckraumes als auch zur Freigabe der Öffnung für das Dach zu bewerkstelligen hat. Die Durchtrittsbreite des Daches in geöffneter Stellung des Deckelteils ist dabei ausschließlich von der Hubbewegung des Öffnungszylinders abhängig.

Aus der DE 198 51 181 C ist ein Cabrio-Fahrzeug mit einem Heckdeckel bekannt, der über eine Verriegelungseinrichtung versehen ist. Die Verriegelungseinrichtung hat einen mit der Karosserie verbundenes Teil und ein mit dem Heckdeckel verbundenes Teil. Der Heckdeckel ist zum Ablegen des Verdeckes um eine im Heckbereich des Fahrzeuges befindliche Drehachse schwenkbar. Die Drehachse ist an der Verriegelungseinrichtung vorgesehen. Die Durchtrittsbreite für das Dach ist damit auch fest vorgegeben und nicht zu verändern.

Es Aufgabe der vorliegenden Erfindung, ein Cabriolet-Fahrzeug der eingangs genannten Art zu schaffen, bei dem die Durchtrittsbreite des Daches verbessert ist.

Zur Lösung dieser Aufgabe zeichnet sich das Cabriolet-Fahrzeug der eingangs genannten Art dadurch aus, daß das Deckelteil in geschlossener Stellung in seinem vorderen Bereich auch mit der Fahrzeugkarosserie verbundenen Lagerböcken gehalten ist und die Lagerböcke zur Vergrößerung der Durchtrittsbreite des Daches in geöffneter Stellung des Deckelteils verlagerbar sind. Bei dem Cabriolet-Fahrzeug nach der Erfindung ist die Durchtrittsöffnung für das Dach bzw. in umgekehrter Öffnungsstellung die Aufnahmeöffnung für Gepäck vergrößert, und zwar durch Lagerböcke, auf denen sich das Deckelteil abstützt, welche in Offenstellung in die Karosserie verlagert werden können.

Des weiteren kann auf einen Hilfsrahmen verzichtet werden, so daß die Anzahl der Bauteile verringert ist. Neben den ohnehin notwendigen Antriebsorganen zum Öffnen des Deckelteils sowie dem ebenfalls notwendigen rückseitigen Schloß zur Halterung des Deckelteils sind keine weiteren Anbindungsteile an die Karosserie notwendig. Bevorzugtermaßen sind die Antriebsorgane für die Bewirkung der Freigabe der Durchtrittsöffnung für das Dach und der Aufnahmeöffnung für das Gepäck gemeinsam ausgebildet, wodurch weitere Bauteile eingespart werden können. Die Raumeinschränkung durch die Antriebsorgane ist gleichfalls vermindert. Es kann zusätzlich oder alternativ vorgesehen sein, daß das Verschließen der Durchtrittsöffnung für das Gepäck automatisch erfolgt. Dann muß kein separater Zugriff zur Kraftausübung auf das geöffnete Deckelteil vorgesehen sein. Die Betätigung ist ohne Kraftaufwand möglich. Besonders vorteilhaft ist hierbei ein Betätigungselement zur Auslösung des Verschließens der Aufnahmeöffnung für das Gepäck nur im Heckbereich des Fahrzeugs angebracht, so daß der Benutzer sicherstellen kann, daß keine Personen durch das schließende Deckelteil gefährdet werden. Weitere Vorteile der Erfindung ergeben sich aus den Unteransprüchen, der nachfolgenden Beschreibung und der Zeichnung, in der ein Ausführungsbeispiel eines Cabriolet-Fahrzeuges nach der Erfindung dargestellt ist. In der Zeichnung zeigen:
- Fig. 1: den Heckbereich eines erfindungsgemäßen Cabriolet-Fahrzeugs in abgebrochener, schematisierter Seitenansicht mit zusätzlich eingezeichneten Halterungs- und Antriebsteilen des Deckelteils,
- Fig. 2: das Detail II in Fig. 1,
- Fig. 3: das Deckelteil nach Fig. 2 bei Freigabe der Durchtrittsöffnung für das Dach,
- Fig. 4: das Deckelteil nach Fig. 2 bei Freigabe der Aufnahmeöffnung für Gepäck,

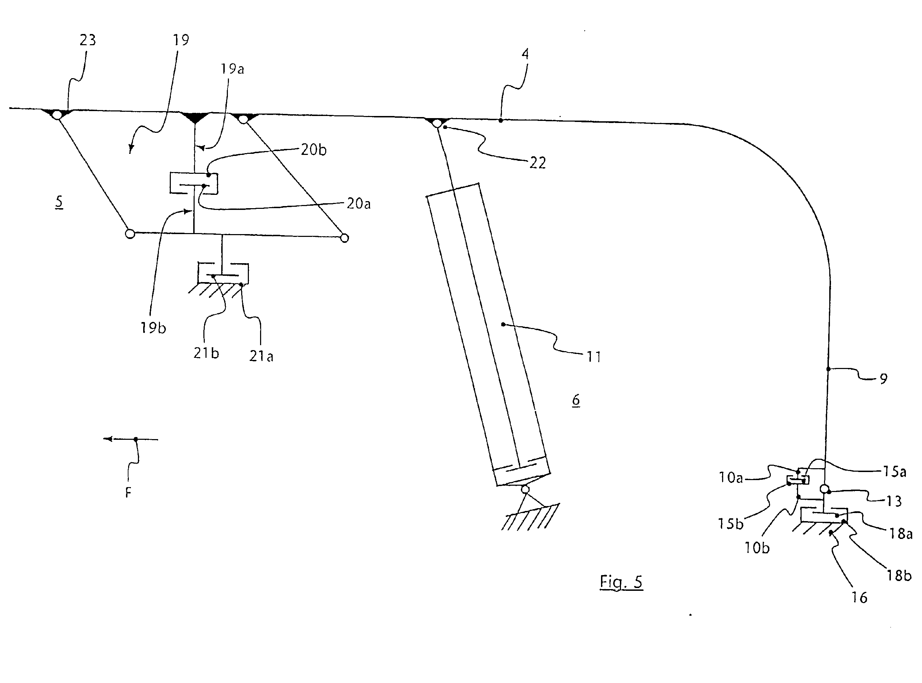

- Fig. 5: eine Funktionsskizze des Deckelteils in der Stellung nach Fig. 2,

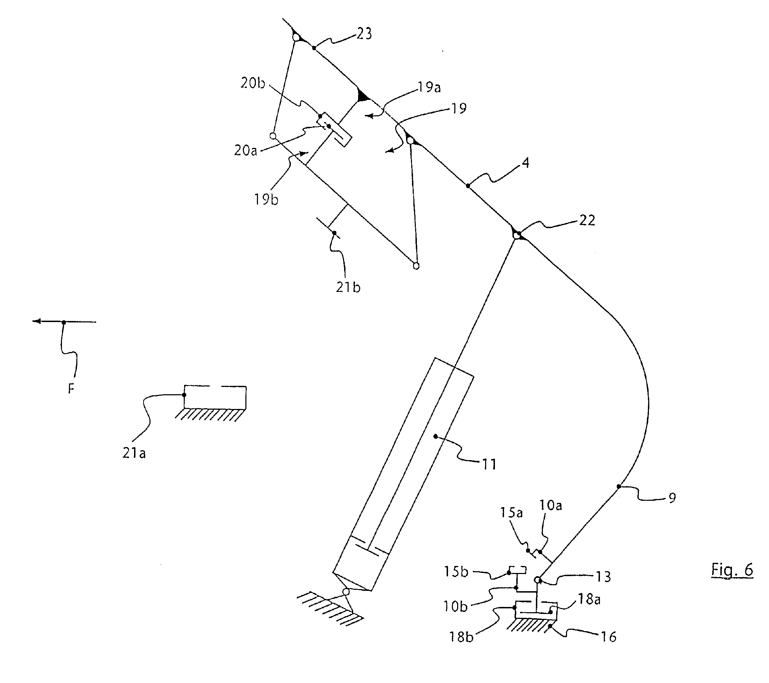

- Fig. 6: eine Funktionsskizze des Deckelteils in der Stellung nach Fig. 3,

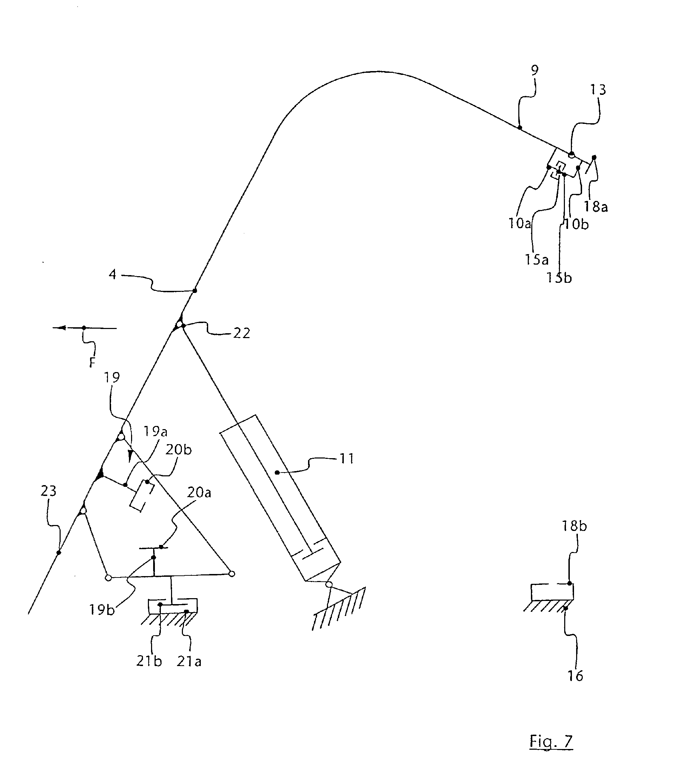

- Fig. 7: eine Funktionsskizze des Deckelteils in der Stellung nach Fig. 4,
- Fig. 8: eine schematisierte Ansicht von schräg hinten auf ein Cabriolet-Fahrzeug mit seitlichen Lagerböcken zur Abstützung des aufliegenden Deckelteils,
- Fig. 9: einen Schnitt entlang der Ebene IX-IX in Fig. 8,
- Fig. 10: den Lagerbock nach Fig. 9 in eingeschwenkter Stellung bei eingelegtem Dach.

Im Ausführungsbeispiel ist ein viersitziges Cabriolet-Fahrzeug 1 dargestellt, das mit einem bereichsweise flexiblen oder insgesamt als Festverdeck ausgebildeten Dach 2 versehen ist. Das Dach 2 ist im rückwärtigen Fahrzeugbereich 3 unter einem Dekkelteil 4 ablegbar. Dieser überdeckt in Doppelfunktion sowohl einen Verdeckaufnahmeraum 5 als auch einen Gepäckaufnahmeraum 6.

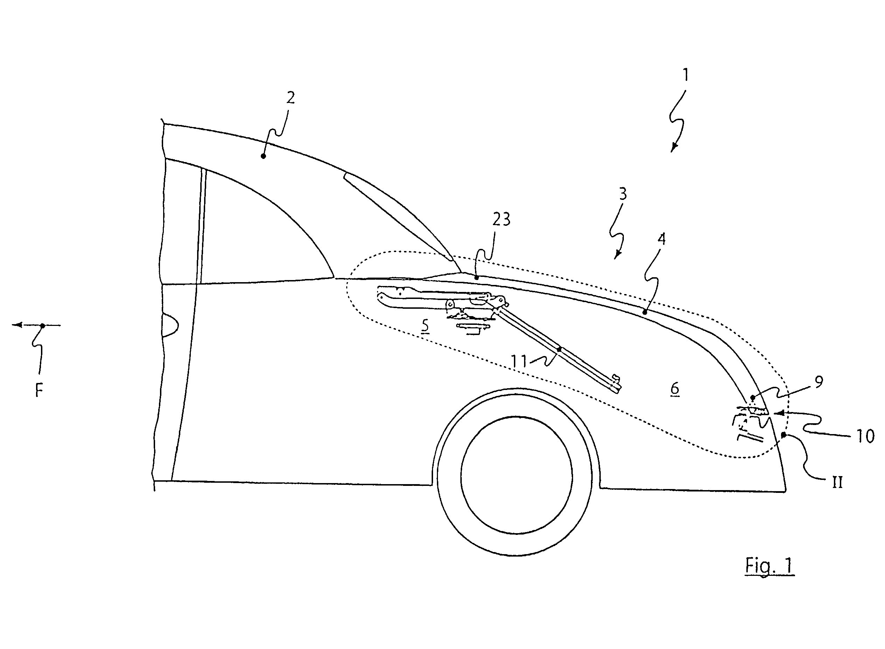

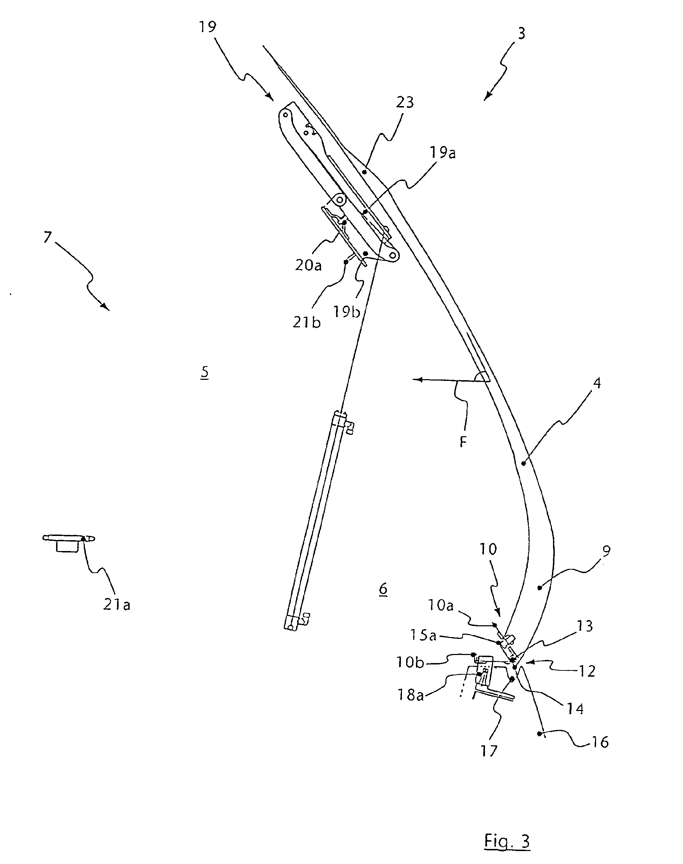

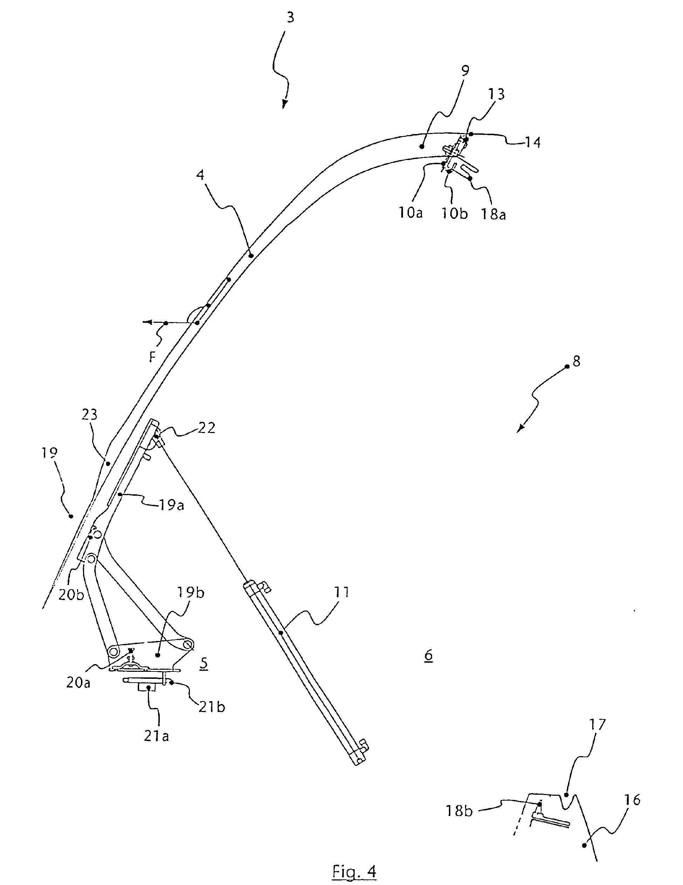

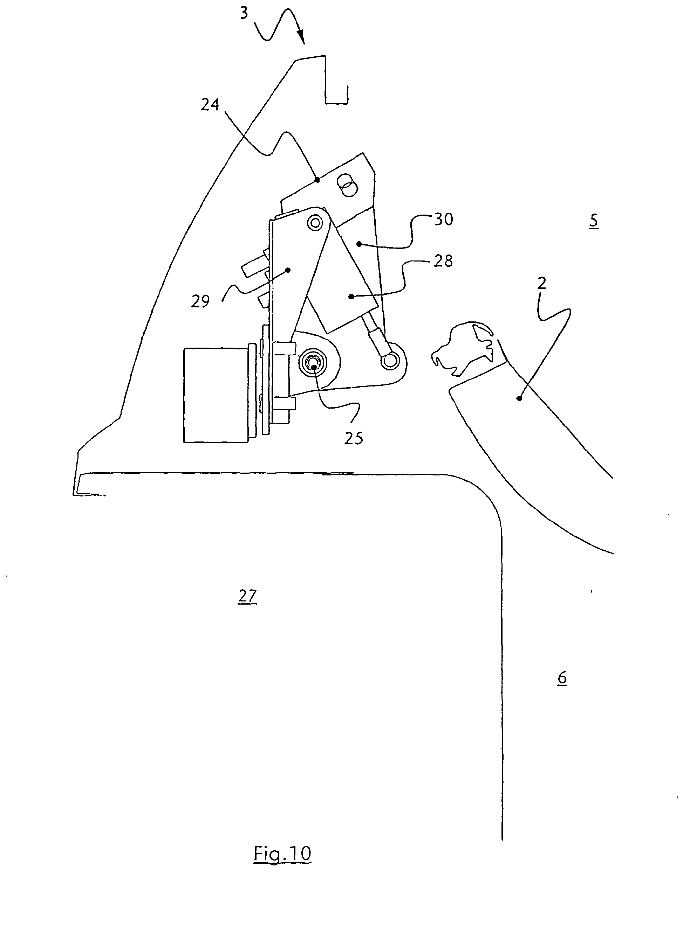

Das Dach 2 ist in seiner geöffneten Stellung (Fig. 10) im Verdeckaufnahmeraum 5 abgelegt und wird dort vom geschlossenen Deckelteil 4 überdeckt. Das Deckelteil 4 kann zur Dachaufnahme bzw. -freigabe gegen die Fahrtrichtung F in einem spitzen Winkel öffnen. Weiterhin ist ein gegensinniges Öffnen des Deckelteils 4 unter Einschluß eines stumpfen Winkels mit der Fahrtrichtung F zur Freigabe einer Aufnahmeöffnung 8 zum Be- oder Entladen des Kofferraums 6 möglich (Fig. 4). Das Dekkelteil 4 ist in seinem rückwärtigen Endbereich 9 an einer Scharniervorrichtung 10 gehalten, die eine Festlegung des Deckelteils 4 sowohl bei vollständig geschlossenem Zustand (Fig. 1) als auch bei Öffnung der Durchtrittsöffnung 7 für das Dach 2 (Fig. 3) sicherstellt.

Während der Freigabe der Durchtrittsöffnung 7 für das Dach 2 (Fig. 3) ist das Dekkelteil 4 außer an der Scharniervorrichtung 10 nur noch über Antriebsorgane 11, die im vorliegenden Ausführungsbeispiel als Hydraulikzylinder ausgebildet sind, mit der Karosserie verbunden. Im Ausführungsbeispiel sind zwei seitliche Hydraulikzylinder 11 eingezeichnet. Auch eine andere Anzahl von Antriebsorganen und eine andere Anordnung kommen in Frage.

Bei der hier gezeigten Anordnung der Antriebsorgane 11 können sowohl die Öffnungs- und Schließbewegung des Deckelteils 4 zur Freigabe der Durchtrittsöffnung 7 für das Dach 2 als auch die Öffnungs- und Schließbewegung des Deckelteils 4 zur Freigabe der Aufnahmeöffnung 8 für Gepäck über die seitlichen Hydraulikzylinder 11 bewirkt werden (Fig. 3 und Fig. 4). Das Antriebsorgan 11 erfüllt daher eine Doppelfunktion, indem es die beiden gegensinnigen Bewegungen des Deckelteils 4 bewirken kann.

Auch bezüglich der Öffnung des Deckelteils 4 zum Be- und Entladen von Gepäck sind Auf- und Zubewegung angetrieben: Neben der für das Öffnen einer Kofferraumklappe üblichen Unterstützung während der Öffnungsphase ist erfindungsgemäß vorgesehen, daß die Antriebsorgane 11 sowohl das Öffnen des Deckelteils 4 zur Gepäckaufnahme als auch durch entgegengesetzte Druckmitteleinleitung das Schließen des Deckelteils 4 bewirken. Diese Maßnahme kann auch bei Vorhandensein getrennter Antriebsorgane für die Öffnung des Deckelteils im Sinne der Freigabe einer Durchtrittsöffnung für das Dach bzw. im Sinne der Freigabe einer Aufnahmeöffnung für Gepäck vorgesehen sein. Ebenso ist es hierfür nicht erforderlich, daß keine weitere Anbindung, etwa über Hilfsrahmen, vorgesehen ist. Besonders vorteilhaft ist jedoch die Funktion einer Auf- und Zuziehhilfe für das Deckelteil 4 bei Bewegung im Sinne einer Freigabe der Aufnahmeöffnung 8 für Gepäck in Kombination mit den genannten Merkmalen ausgebildet, da dann ohnehin ein Antriebsorgan 11, das in zwei Richtungen ansteuerbar sein muß, für das Deckelteil 4 vorhanden ist. Weitere Gasdruckzylinder, mechanische Federn oder ähnliches als Unterstützung für das Öffnen des Deckelteils 4 im Sinne einer Kofferraumklappe sind dann entbehrlich. Die Anzahl der verwendeten Bauteile ist erheblich vermindert.

Um das Zuziehen des Deckelteils 4 aus der gemäß Fig. 4 geöffneten Stellung in die geschlossene Stellung nach Fig. 1 mit Hilfe der Antriebsorgane 11 zu bewirken, ist ein Betätigungselement vorgesehen, über dessen Auslösung der Antrieb 11 mit Hydraulikmittel beaufschlagt wird. Das Betätigungselement (nicht eingezeichnet) kann beispielsweise ein Schloß oder eine Drucktaste sein, das auch in die Rückleuchten integriert sein kann. Dadurch ist es optisch unauffällig. Auch eine Fernsteuerung vom Fahrzeuginnenraum ist möglich, jedoch ist eine Anordnung des Betätigungselements am Fahrzeugheck dahingehend besonders sicher, daß der Benutzer sich vor Betätigung des Schließvorgangs davon überzeugen kann, daß keine Umstehenden durch das sich schließende Deckelteil 4 eingeklemmt werden können. Eine zusätzliche Abbruchsicherung für das Zuschwenken des Deckelteils 4 kann vorgesehen sein. Auch kann vorgesehen sein, daß der Hydraulikzylinder 11 nur so lange mit Druckmittel beaufschlagt wird, wie das Betätigungselement vom Benutzer aktiviert, also beispielsweise die Drucktaste gedrückt wird.

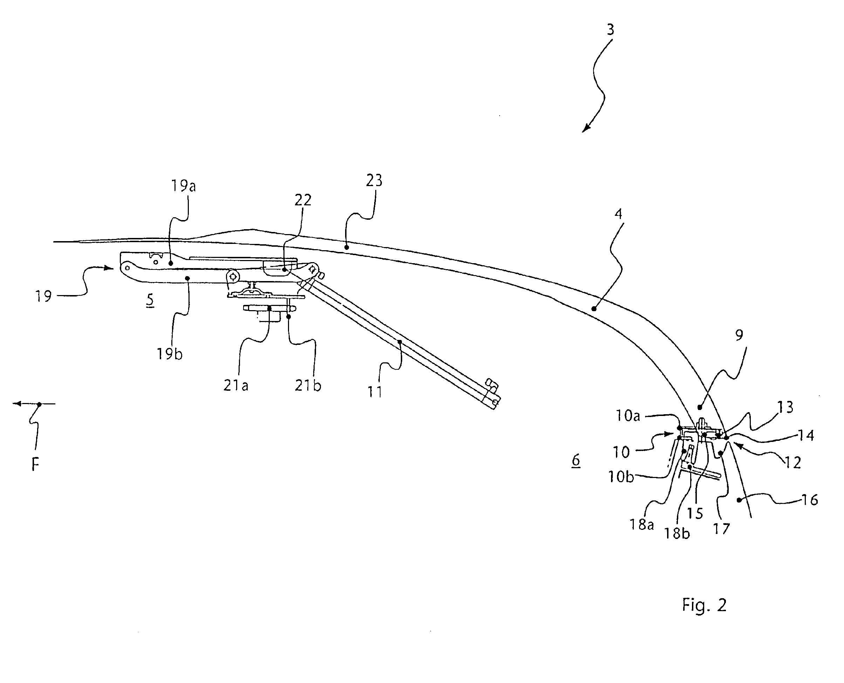

Die Anbindung des Deckelteils an die Karosserie wird weiterhin dadurch verbessert, daß das Scharnierteil 10, um das herum das Deckelteil 4 zum Aufschwenken zur Freigabe der Durchtrittsöffnung 7 für das Dach 2 aufschwenkbar ist, vollständig dem Deckelteil 4 zugeordnet ist, so daß das Scharnierteil 10 bei Öffnen des Deckelteils 4 im Sinne einer Freigabe der Aufnahmeöffnung für Gepäck mitbewegt wird. Hierzu ist die Schwenkachse 13 im Endbereich 9 des Deckelteils 4 angeordnet. Im Unterschied zu bisherigen Lösungen, bei denen die Schwenkachse der Karosserie zugeordnet und das Deckelteil 4 damit von dieser beabstandet war, wird nun die hintere Kante 14, die der Trennfuge 12 zu weiteren Karosserieteilen 16, beispielsweise einer Stoßstange, benachbart ist, beim Aufschwenken des Deckelteils 4 zur Freigabe der Durchtrittsöffnung 7 für das Dach 2 kaum noch abwärtsverlagert, sondern durch die unmittelbare Nachbarschaft zwischen der Schwenkachse 13 und der Abschlußkante 14 bleibt letztere beim Aufschwenken nahezu ortsfest. Die Breite der Fuge 12 kann dadurch erheblich vermindert werden, was einen optisch angenehmeren Abschluß schafft. Die Gefahr von Kollisionen zwischen der Abschlußkante 14 und den Karosserieteilen 16 ist vermindert. Eine Ausnehmung 17 (in der Zeichnung übertrieben groß dargestellt) im oberen Bereich der Stoßstange 16 kann zudem eine leichte Abwärtsverlagerung der Abschlußkante 14 aufnehmen, ohne daß die Ausnehmung 17 bei geschlossenem Deckelteil 4 sichtbar wäre (Fig. 2).

Die Scharniervorrichtung 10 umfaßt zwei Teile 10a,10b, die durch die Schwenkachse 13 miteinander in Verbindung stehen. Das Scharnierunterteil 10b ist mit einem oberen Schloßteil 18a versehen, der die Halterung des Deckelteils 4 am Karosserieteil 16 über Verbindung mit einem dort angeordneten unteren Schloßteil 18b sicherstellt. Hier kommen übliche Schlösser, beispielsweise Zapfenschlösser oder dergleichen, in Frage.

Um beim Öffnen des Deckelteils 4 zur Freigabe der Aufnahmeöffnung 8 für Gepäck (Fig. 4) zu gewährleisten, daß der obere und der untere Scharnierteil 10a,10b nicht gegeneinander aufschwenken, sind diese über eine zweigeteilte Haltevorrichtung 15a,15b miteinander verbunden. Die Haltevorrichtung 15a,15b kann beispielsweise über einen (elektro-)magnetischen Verschluß sichergestellt sein, auch über einen elastisch verformbaren Pilzkopf, der in eine entsprechende Verengung des Gegenstücks eingreift. Im Ausführungsbeispiel ist ein mit Hinterschneidungen versehener Kopfbereich 15a an dem Scharnieroberteil 10a angeordnet. Zu dessen Sicherung ist die Hinterschneidung im Scharnierunterteil 10b von einem steuerbaren und damit beweglichen Bolzen 15b hintergriffen. Zur Öffnung des Deckelteils 4 im Sinne einer Freigabe der Durchtrittsöffnung 7 für das Dach 2 (Fig. 3) wird die Haltevorrichtung 15 außer Eingriff gebracht, was entweder allein durch die Kraft der Antriebsorgane 11 erreicht werden kann, etwa bei einem Magnetverschluß oder bei einem elastisch verformbaren Pilzkopf 15a, oder es wird zusätzlich zunächst ein Steuerungselement wie der bewegliche Bolzen 15b außer Eingriff bewegt, um die Freigabe des Scharnieroberteils 10a gegen das Scharnierunterteil 10b zu ermöglichen. Zur gegensinnigen Öffnung des Deckelteils 4 bleiben die Scharnierteile miteinander verbunden.

Um die volle Durchtrittsbreite bei Öffnung des Deckelteils 4 zur Freigabe der Durchtrittsöffnung 7 für das Dach 2 zu erhalten, ist eine Mehrgelenkanordnung 19, die die Aufschwenkbewegung des Deckelteils 4 zur Aufnahme von Gepäck (Fig. 4) ermöglicht, bei dem besagten Aufschwenken zur Dachaufnahme (Fig. 3) ebenfalls vollständig mit dem Deckelteil 4 mitbewegt, ähnlich wie umgekehrt bei der gegensinnigen Öffnung die Scharniervorrichtung 10. Bei Öffnung des Deckelteils 4 zur Freigabe der Durchtrittsöffnung 7 für das Dach 2 sind die Teile 19a und 19b der Mehrgelenkanordnung über Schloßteile 20a,20b, die ähnlich wie das Schloß 15a,15b des Scharnierteils 10 ausgebildet sein kann, miteinander verbunden, so daß sie vollständig mit aufschwenken. Das Unterteil 19b der Mehrgelenkanordnung ist bei gegensinnigem Aufschwenken sowie im geschlossenen Zustand mit einem Schloß 21, beispielsweise über einen ausfahrbaren Bolzen 21a, der in eine entsprechende Öse 21 b eingreift, mit der Fahrzeugkarosserie fest verbunden. Bei Aufschwenken gemäß Fig. 4 bleibt daher das Unterteil 19b der Mehrgelenkanordnung 19 in Verbindungsstellung mit der Karosserie, und die Mehrgelenkanordnung 19 kann sich öffnen. Der Vorteil einer Mehrgelenkanordnung 19 gegenüber einem einfachen Scharnier an dieser Stelle liegt darin, daß durch die Mehrgelenkanordnung 19 nicht allein eine Schwenk-, sondern auch eine Hubbewegung des Deckelteils 4 vermittelbar ist.

Je nachdem, ob das Schloß 18a,18b oder das Schloß 21a,21b gelöst ist, führt eine Ausschubbewegung der Kolbenstange des Hydraulikzylinders 11 bei geschlossenem Deckelteil 4 zu einer Öffnung entweder im Sinne einer Freigabe der Durchtrittsöffnung 7 oder der Aufnahmeöffnung 8. Der Anlenkpunkt 22 des Hydraulikzylinders ist dabei derart ausgebildet, daß er für beide Bewegungsabläufe erhalten bleiben kann und somit nur das eine Antriebsorgan 11 pro Fahrzeugseite notwendig ist. Die Entscheidung, welche Bewegung dann eingeleitet wird, ist über die Steuerung der genannten Schlösser zu erreichen.

Das Deckelteil 4 ist im geschlossenen Zustand an seinem hinteren Endbereich 9 über die Scharniervorrichtung 10 und das Schloß 18a,18b abgestützt. In seinem vorderen Endbereich 23 ist eine weitere Abstützung des Deckelteils 4 erforderlich. Diese wird im Ausführungsbeispiel durch seitliche Lagerböcke 24 erreicht, auf denen das Deckelteil 4 im geschlossenen Zustand aufliegt. Im Ausführungsbeispiel liegt der untere Teil 19b der Mehrgelenkanordnung 19 auf den Lagerböcken 24 im geschlossenen Zustand des Deckelteils 4 auf. Das Mehrgelenk 19 wird bei Öffnung des Dekkelteils 4 zur Freigabe der Durchtrittsöffnung 7 für das Dach 2 vollständig mit diesem aufgeschwenkt und hebt dann von den Lagerböcken 24 ab. Bei gegensinniger Öffnung wird der untere Gelenkteil 19b auf den Lagerböcken 24 gehalten, so daß diese eine Abstützung für das sich öffnende Gelenk 19 bieten.

Um eine maximale Durchtrittsbreite für das Dach 2 sicherzustellen, sind die Lagerböcke 24 an Schwenklagern 25 um eine sich parallel zur Fahrzeuglängsachse erstreckende Schwenkachse 26 schwenkbeweglich angeordnet.

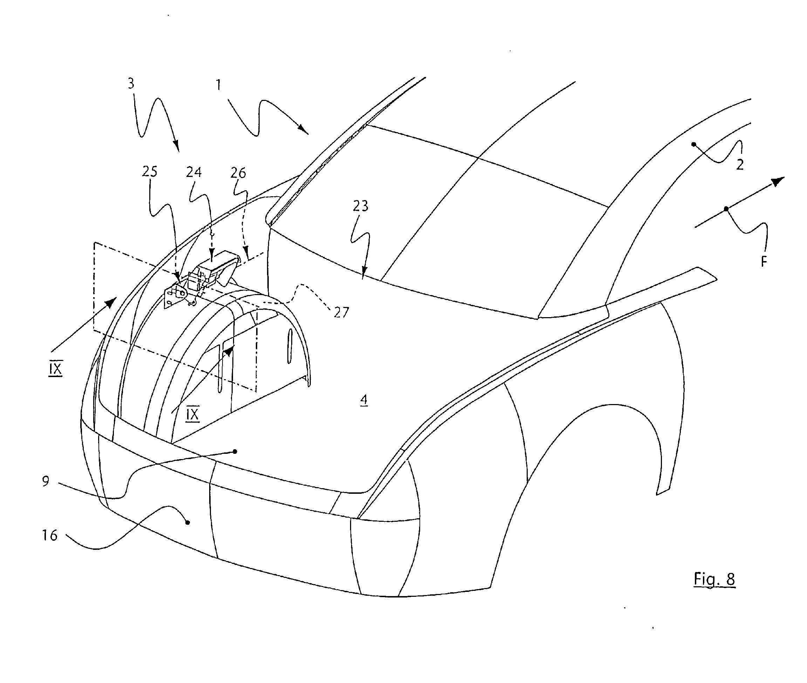

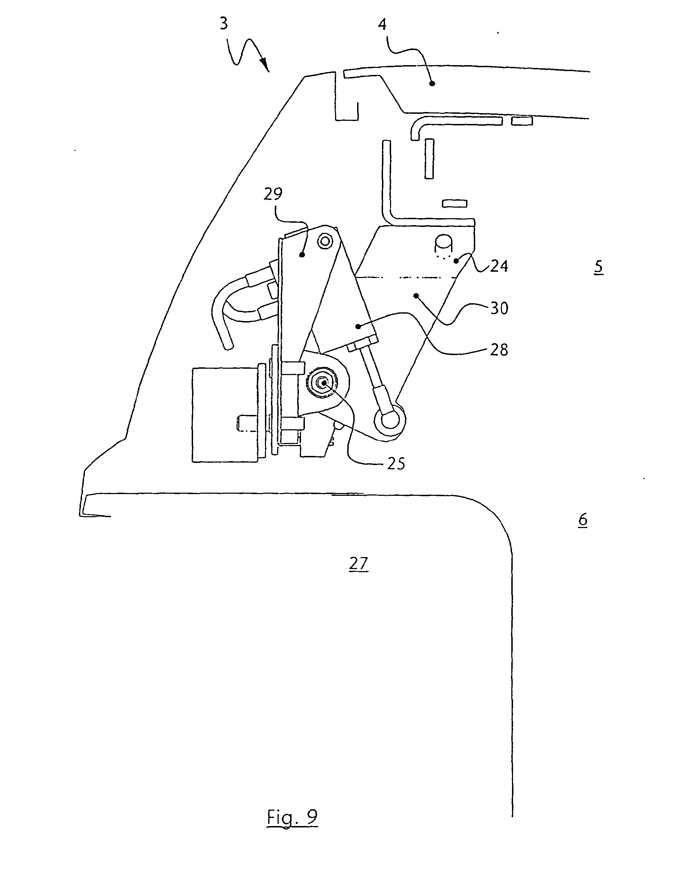

Alternativ ist auch eine Anordnung von Lagerböcken unterhalb einer Heckscheibe vorstellbar, so daß diese dann um eine Fahrzeugquerachse verlagerbar wären. Im Ausführungsbeispiel sind zwei Lagerböcke 24 (in Fig. 8 nur der linke eingezeichnet) jeweils seitlich in der Karosserie angeordnet und bei geöffnetem Deckelteil 4 seitlich verlagerbar. Die volle Breite des Deckelteils 4 steht somit auch als Durchtrittsbreite für das Dach 2 zur Verfügung, das daher, wie in Fig. 10 sichtbar ist, breiter sein kann, als diese bei ausgeschwenkten Lagerböcken (Fig. 9) möglich wäre. Nach Durchtritt des Dachs 2 kann ein Rückschwenken der Lagerböcke 24 erfolgen.

Um die Schwenkbarkeit der Lagerböcke 24 um die Lagerstellen 25 sicherzustellen, sind Hydraulikzylinder 28 vorgesehen, die zwischen einem karosseriefesten Teil 29 und einem ausschwenkbaren Teil 30 der Lagerböcke 24 angeordnet sind und diese Teile gegeneinander verschwenken.

Die Lagerböcke 24 sind insgesamt oberhalb der Radkästen 27 angebracht, so daß sie sich in einer Nische des Kofferraums 6 befinden und auch bei geschlossenem Dach 2 daher den Gepäckraum nur unwesentlich einschränken.

Die Lagerböcke 24 können beispielsweise aus metallischen Elementen hergestellt sein. An Stelle der Hydraulikzylinder 28 kommen auch Elektromotoren oder andere Antriebe zum Ein- und Ausschwenken in Betracht. Neben der Schwenkbarkeit des Teils 30 gegen das Teil 29 käme alternativ auch eine vollständige Verlagerbarkeit, etwa eine seitliche Verschiebung, von Lagerböcken in Betracht. In jedem Fall ist erreicht, daß die Anbindung des Deckelteils 4 an die Karosserie insofern verbessert wird, als die vordere Abstützung den Verdeckdurchtritt nicht einengt, sondern dieser mit einer gegenüber der Anbindung bei geschlossenem Deckelteil vergrößerten Eintrittsöffnung hindurchtreten kann.

Die Ansteuerung der Hydraulikzylinder oder dergleichen Antriebsorgane 28 kann mit der Ansteuerung der Antriebsorgane 11 gekoppelt sein, so daß bei geöffnetem Dekkelteil 4 automatisch das Einschwenken der Lagerböcke 24 erfolgt, ohne daß hierfür ein weiterer Steueraufwand erforderlich wäre.

## Patentansprüche

1. Cabriolet-Fahrzeug mit einem im rückwärtigen Fahrzeugbereich (3) unterhalb eines Deckelteils (4) ablegbaren Dach (2), wobei das Deckelteil (4) einerseits zur Freigabe einer seinem vorderen Endbereich (23) benachbarten Durchtrittsöffnung (7) für das Dach und andererseits zur Freigabe einer seinem hinteren Endbereich (9) benachbarten Aufnahmeöffnung (8) für Gepäck auf- und zu beweglich ist, wobei das Deckelteil (4) in geschlossener Stellung in seinem vorderen Bereich (23) auf mit der Fahrzeugkarosserie verbundenen Lagerböcken (24) gehalten ist, **dadurch gekennzeichnet, daß** die Lagerböcke (24) zur Vergrößerung der Durchtrittsbreite des Daches (2) in geöffneter Stellung des Deckelteils (4) verlagerbar sind.

2. Cabriolet-Fahrzeug nach Anspruch 1, **dadurch gekennzeichnet, daß** die Lagerböcke (24) ein sich parallel zur Fahrzeuglängsachse erstreckenden Schwenkachsen (26) schwenkbeweglich gehalten sind.

3. Cabriolet-Fahrzeug nach Anspruch 1 oder 2, **dadurch gekennzeichnet, daß** bei Freigabe der Durchtrittsöffnung (7) für das Dach (2) das Deckelteil (4) in seinem rückwärtigen Endbereich (9) an zumindest einer Scharniervorrichtung (10) gehalten ist und im übrigen eine Verbindung des Deckelteils (4) zur Karosserie nur über ein oder mehrere, die Auf- oder Zubewegung des Deckelteils (4) für die Dachaufnahme bewirkende oder unterstützende Antriebsorgan(e) (11) besteht.

4. Cabriolet-Fahrzeug nach Anspruch 3, **dadurch gekennzeichnet, daß** das Öffnen und Schließen sowohl der Durchtrittsöffnung (7) für das Dach (2) als auch der Aufnahmeöffnung (8) für Gepäck über zumindest ein gemeinsames Antriebsorgan (11) bewirkbar ist.

5. Cabriolet-Fahrzeug nach Anspruch 4, **dadurch gekennzeichnet, daß** zwei seitliche Hydraulikzylinder (11) als jeweils gemeinsames Antriebsorgan vorgesehen sind.

6. Cabriolet-Fahrzeug nach einem der vorangehenden Ansprüche, **dadurch gekennzeichnet, daß** das Deckelteil (4) sowohl zur Freigabe als auch zum Schließen der Aufnahmeöffnung (8) für Gepäck jeweils mit einer Antriebskraft beaufschlagbar ist.

7. Cabriolet-Fahrzeug nach Anspruch 6, **dadurch gekennzeichnet, daß** zur Bewirkung der die Aufnahmeöffnung (8) für das Gepäck schließenden Bewegung ein Betätigungselement im Heckbereich (3) des Fahrzeugs (1) vorgesehen ist.

8. Cabriolet-Fahrzeug nach einem der vorangehenden Ansprüche, **dadurch gekennzeichnet, daß** zur Freigabe der Durchtrittsöffnung für das Dach das Deckelteil (4) um einen hinteren Scharnierbereich (10) aufschwenkbar ist und dieser Scharnierbereich (10) vollständig dem Deckelteil (4) zugeordnet ist, so daß er bei Freigabe der Aufnahmeöffnung (8) für Gepäck vollständig mit bewegbar ist.

9. Cabriolet-Fahrzeug nach Anspruch 8, **dadurch gekennzeichnet, daß** zur Sicherung von Scharnierteilen (10a; 10b) aneinander eine Haltevorrichtung (15a; 15b) zwischen diesen vorgesehen ist.

10. Cabriolet-Fahrzeug nach einem der vorangehenden Ansprüche, **dadurch gekennzeichnet, daß** zur Freigabe der Aufnahmeöffnung (8) für Gepäck dem vorderen Endbereich (23) des Deckelteils (4) eine Mehrgelenkanordnung (19) zugeordnet ist, die gleichzeitig eine Schwenk- und Hubbewegung auf das Deckelteil (4) ausübt.

11. Cabriolet-Fahrzeug nach Anspruch 10, **dadurch gekennzeichnet, daß** bei Freigabe der Durchtrittsöffnung (7) für das Dach (2) die Mehrgelenkanordnung (19) vollständig dem Deckelteil (4) zugeordnet ist und deren gegeneinander bewegliche Teile (19a; 19b) durch eine Haltevorrichtung (20a;20b) aneinander gesichert sind.

## Claims

1. Convertible vehicle, having a roof (2) able to be stowed in the rear part (3) of the vehicle underneath a cover member (4), the cover member (4) being movable to open and close, on the one hand to uncover an opening (7) adjacent its front end-region (23) for the roof to pass through and on the other hand to uncover a receiving opening (8) for luggage adjacent its rear end-region (9), the cover member (4) being held in the closed position, in its front region (23), on support brackets (24) connected to the bodywork of the vehicle, **characterised in that**, when the cover member (4) is in the open position, the support brackets (24) are displaceable to increase the width available for the roof (2) to pass through.

2. Convertible vehicle according to claim 1, **characterised in that** the support brackets (24) are held in such a way as to be moveable by pivoting on axes of pivot (26) extending parallel to the longitudinal axis of the vehicle.

3. Convertible vehicle according to claim 1 or 2, **characterised in that**, when the opening (7) for the roof (2) to pass through is uncovered, the cover member (4) is held in its rear end-region (9) on at least one hinge arrangement (10), and a connection between the cover member (4) and the bodywork is otherwise made only via one or more drive member(s) (11) which produce or assist the opening or closing movement of the cover member (4) for the reception of the roof.

4. Convertible vehicle according to claim 3, **characterised in that** the opening and closing both of the opening (7) for the roof (2) to pass through and of the receiving opening (8) for luggage can be caused by means of at least one common drive member (11).

5. Convertible vehicle according to claim 4, **characterised in that** two lateral hydraulic cylinders (11) are provided, each forming a common drive member.

6. Convertible vehicle according to one of the foregoing claims, **characterised in that** the cover member (4) can have a driving force applied to it both to uncover the receiving opening (8) for luggage and to close it.

7. Convertible vehicle according to claim 6, **characterised in that** an actuating member is provided in the rear part (3) of the vehicle (1) to produce the movement which closes the receiving opening (8) for luggage.

8. Convertible vehicle according to one of the foregoing claims, **characterised in that**, to uncover the opening for the roof to pass through, the cover member (4) can be pivoted open about a rear hinge region (10), and this hinge region (10) is entirely associated with the cover member (4), thus enabling it to move with the latter when the receiving opening (8) for luggage is uncovered.

9. Convertible vehicle according to claim 8, **characterised in that**, to lock hinge parts (10a, 10b) to one another, a retaining arrangement (15a, 15b) is provided between them.

10. Convertible vehicle according to one of the foregoing claims, **characterised in that**, to uncover the receiving opening (8) for luggage, the front end-region (23) of the cover member (4) has associated with it a multi-jointed linkage arrangement (19) which imparts a simultaneous pivoting and lifting movement to the cover member (4).

11. Convertible vehicle according to claim 10, **characterised in that**, when the opening (7) for the roof (2) to pass through is uncovered, the multi-jointed linkage arrangement (19) is entirely associated with the cover member (4) and its parts (19a, 19b) which are able to move relative to one another are locked to one another by a retaining arrangement (20a, 20b).

## Revendications

1. Véhicule cabriolet avec un toit (2) pouvant être rangé dans une région arrière (3) du véhicule en dessous d'une partie de couvercle (4), dans lequel la partie de couvercle (4) est mobile vers le haut et vers le bas d'une part pour libérer une ouverture de passage (7) pour le toit voisine de sa région d'extrémité avant (23) et d'autre part pour libérer une ouverture de réception (8) pour des bagages voisine de sa région d'extrémité arrière (9), dans lequel la partie de couvercle (4) est maintenue en position fermée dans sa région avant (23) sur des blocs d'appui (24) attachés à la carrosserie du véhicule, **caractérisé en ce que** les blocs d'appui (24) sont déplaçables pour agrandir la largeur de passage du toit (2) en position ouverte de la partie de couvercle (4).

2. Véhicule cabriolet selon la revendication 1, **caractérisé en ce que** les blocs d'appui (24) sont maintenus en mouvement pivotant autour d'axes de pivotement (26) s'étendant parallèlement à l'axe longitudinal du véhicule.

3. Véhicule cabriolet selon la revendication 1 ou 2, **caractérisé en ce que**, lors de la libération de l'ouverture de passage (7) pour le toit (2), la partie de couvercle (4) est maintenue dans sa région d'extrémité arrière (9) sur au moins un dispositif de charnières (10) et **en ce qu'**il existe pour le reste une liaison de la partie de couvercle (4) avec la carrosserie uniquement par un ou plusieurs organe(s) d'entraînement (11) provoquant ou accentuant le mouvement d'ouverture ou de fermeture de la partie de couvercle (4) pour la réception du toit.

4. Véhicule cabriolet selon la revendication 3, **caractérisé en ce que** l'ouverture et la fermeture aussi bien de l'ouverture de passage (7) pour le toit (2) que de l'ouverture de réception (8) pour des bagages peuvent être provoquées au moyen d'au moins un organe d'entraînement commun (11).

5. Véhicule cabriolet selon la revendication 4, **caractérisé en ce qu'**il est prévu deux vérins hydrauliques latéraux (11) comme organe d'entraînement commun respectif.

6. Véhicule cabriolet selon l'une quelconque des revendications précédentes, **caractérisé en ce que** la partie de couvercle (4) peut être sollicitée chaque fois par une force d'entraînement aussi bien pour libérer que pour fermer l'ouverture de réception (8) pour des bagages.

7. Véhicule cabriolet selon la revendication 6, **caractérisé en ce qu'**il est prévu un élément d'actionnement dans la région arrière (3) du véhicule (1) pour provoquer le mouvement de fermeture de l'ouverture de réception (8) pour des bagages.

8. Véhicule cabriolet selon l'une quelconque des revendications précédentes, **caractérisé en ce que** la partie de couvercle (4) peut pivoter autour d'une région de charnières arrière (10) pour libérer l'ouverture de passage pour le toit et **en ce que** cette région de charnières (10) est entièrement associée à la partie de couvercle (4), de telle manière qu'elle se déplace entièrement avec celle-ci lors de la libération de l'ouverture de réception (8) pour des bagages.

9. Véhicule cabriolet selon la revendication 8, **caractérisé en ce qu'**il est prévu entre les parties de charnière un dispositif de maintien (15a; 15b) pour fixer les parties de charnière (10a; 10b) l'une à l'autre.

10. Véhicule cabriolet selon l'une quelconque des revendications précédentes, **caractérisé en ce que**, pour la libération de l'ouverture de réception (8) pour des bagages, un dispositif à plusieurs articulations (19), qui exerce simultanément un mouvement de pivotement et de levée sur la partie de couvercle (4), est associé à la région d'extrémité avant (23) de la partie de couvercle (4).

11. Véhicule cabriolet selon la revendication 10, **caractérisé en ce que**, lors de la libération de l'ouverture de passage (7) pour le toit (2), le dispositif à plusieurs articulations (19) est entièrement associé à la partie de couvercle (4) et ses parties (19a; 19b) mobiles l'une par rapport à l'autre sont fixées l'une à l'autre par un dispositif de maintien (20a; 20b).
